# EUROPÄISCHE PATENTANMELDUNG

(11) **EP 0 668 093 A2**
(43) Veröffentlichungstag der Anmeldung: **23.08.1995**
(21) Anmeldenummer: 94116007.9
(22) Anmeldetag: 11.10.1994
(51) Int. Cl.: B01D 33/04, B01D 33/056

(54) **Filtrieranlage mit Abdichtvorrichtung**

(30) Priorität: 16.02.1994 DE 4404852
(71) Anmelder: HYDAC FILTERTECHNIK GmbH, D-66273 Sulzbach (DE)
(72) Erfinder: Teckentrup, Heinrich, D-66123 Saarbrücken (DE)
(74) Vertreter: Patentanwälte Bartels, Held und Partner

(57) **Zusammenfassung**

2. Die Erfindung betrifft eine Filtrieranlage zum Abfiltrieren einer Flüssigkeit aus einer Schmutzteile aufweisenden Suspension 22, die von einem Sammelbehälter 10 aufnehmbar ist, der über mindestens einen Durchgang 14 mit einer Absaugkammer 18 verbunden ist, in der ein Unterdruck erzeugbar ist, wobei der jeweilige Durchgang 14 von einem endlosen Filterband 26 abdeckbar ist, das mittels eines Antriebes 30 in einer zumindest teilweise innerhalb des Sammelbehälters 10 angeordneten Führung 34 verfahrbar ist, und wobei mindestens ein Dichtmittel 50 vorhanden ist, das randseitig auf das Filterband 26 mit einem druckbeaufschlagten Sperrmedium einwirkend eine ungewollte Durchtrittsstelle 52 zwischen dem Inneren des Sammelbehälters 10 und der Absaugkammer 18 dichtend verschließt. Dadurch, daß das jeweilige Dichtmittel 50 mindestens einen starr ausgebildeten Versorgungskanal 54 aufweist, der mit einer Abdeckfläche 56 das Filterband 26 unter Bildung der Durchtrittsstelle 52 randseitig übergreift, und daß die derart gebildete Durchtrittsstelle 52 durch den im Versorgungskanal 54 herrschenden Druck des Sperrmediums dichtend verschlossen ist, ist bei der Filtrieranlage eine kontinuierliche Filtrierung möglich, wobei gleichzeitig die angesprochene Durchtrittsstelle sicher dichtend verschlossen ist.

## Beschreibung

Die Erfindung betrifft eine Filtrieranlage zum Abfiltrieren einer Flüssigkeit aus einer Schmutzteile aufweisenden Suspension, die von einem Sammelbehälter aufnehmbar ist, der über mindestens einen Durchgang mit einer Absaugkammer verbunden ist, in der ein Unterdruck erzeugbar ist, wobei der jeweilige Durchgang von einem endlosen Filterband abdeckbar ist, das mittels eines Antriebes in einer zumindest teilweise innerhalb des Sammelbehälters angeordneten Führung verfahrbar ist, und wobei mindestens ein Dichtmittel vorhanden ist, das randseitig auf das Filterband mit einem druckbeaufschlagten Sperrmedium einwirkend eine ungewollte Durchtrittsstelle zwischen dem Inneren des Sammelbehälters und der Absaugkammer dichtend verschließt.

Dahingehende Filtrieranlagen (DE-PS 39 10 930) dienen unter anderem dazu, verschmutzte Kühlschmierstoffflüssigkeit, die entweder direkt von einer Bearbeitungsmaschine oder über eine Rückpumpstation in den Sammelbehälter gelangt, von den bei der spanabhebenden Bearbeitung entstehenden Verschmutzungen, insbesondere von den Spänen, zu reinigen, damit der derart gereinigte Kühlschmierstoff an der jeweiligen Bearbeitungsmaschine wiederverwendbar ist. Auslösbar ist dieser Filtriervorgang mittels einer Absaugkammer, in der mittels einer Unterdruckeinrichtung ein Unterdruck erzeugbar ist, wobei die zurückgehaltenen Verschmutzungen, insbesondere in Form der Späne, mittels des Filterbandes aus dem Sammelbehälter abtransportiert werden.

Mit dieser bekannten Filtrieranlage ist es möglich, mit dem als Endlosband ausgebildeten Filterband mit einer einstellbaren kontinuierlichen Geschwindigkeit über den Durchgang zwischen Sammelbehälter und Absaugkammer hinwegzufahren, ohne daß die Unterdruckeinrichtung hierzu abgeschaltet werden müßte, d.h. ein kontinuierlicher Filtriervorgang ist möglich. An der Übergangsstelle zwischen dem Inneren des Sammelbehälters und der Absaugkammer kann es jedoch am randseitigen Bereich des Filterbandes ungewollt zu einer Durchtrittsstelle kommen, über die die zu filtrierende Suspension unmittelbar in die Absaugkammer gelangen kann, was die Filtrierleistung und das Filtrierergebnis der Anlage beeinträchtigt.

Es ist zwar bei einer gattungsgemäßen Filtrieranlage nach der US-PS 4 390 428 bereits vorgeschlagen worden, diese ungewollte Durchtrittsstelle mit einem druckbeaufschlagten Sperrmedium in Form eines aufblasbaren Schlauches zu verschließen, der das Filterband dichtend gegen die ihm zugewandte Führung preßt; allein mit dieser bekannten Anordnung ist das Abdichten des Filterbandes nur in seiner Ruhestellung möglich, so daß ein kontinuierlicher Betrieb der Anlage ausgeschlossen ist. Kommt darüber hinaus in die angesprochene Durchtrittsstelle ein Metallspan od.dgl., kann beim Weitertransport des Filterbandes der aus einem Gummimaterial bestehende Abdichtschlauch beschädigt werden, so daß der Wartungsaufwand und mithin die Stillstandszeiten dieser bekannten Anlage erhöht sind.

Auch sind aus einem Paar Streifen mit niedriger Reibung und einer weiteren Dichtungsunterlage bestehende Labyrinthdichtungen bei Bandfedern bekannt, die sich zwischen den Positionen befinden, an denen der das Filtermedium tragende Förderer in die unfiltrierte Flüssigkeit ein- und austritt, vgl. US-PS 48 80 538, ferner auch US-PS 37 04 787.

Schließlich ist es auch bekannt, nutenförmige Durchgangsöffnungen mit Filtrat zwecks Sperrwirkung zu beaufschlagen und dieses in einen Abf.lußraum einzuleiten, vgl. DE-OS 26 50 623, ferner auch DE-OS 15 36 851.

Ausgehend von diesem Stand der Technik liegt der Erfindung die Aufgabe zugrunde, eine Filtrieranlage zu schaffen, die eine kontinuierliche Filtrierung erlaubt, wobei gleichzeitig die angesprochene Durchtrittsstelle sicher dichtend verschlossen ist.

Diese Aufgabe löst eine Filtrieranlage mit den Merkmalen des Anspruches 1. Dadurch, daß gemäß dem kennzeichnenden Teil des Anspruches 1 das jeweilige Dichtmittel mindestens einen starr ausgebildeten Versorgungskanal aufweist, der mit einer Abdeckfläche das Filterband unter Bildung der Durchtrittsstelle randseitig übergreift, und daß die derart gebildete Durchtrittsstelle durch den im Versorgungskanal herrschenden Druck des Sperrmediums dichtend verschlossen ist, läßt sich im Versorgungskanal ein in Richtung der möglichen Durchtrittsstelle wirkender Druck aufbauen, der größer ist als die Drucksäule, die durch die im Sammelbehälter bevorratete Suspension entsteht, wodurch ein hermetischer Abschluß erreicht ist. Aufgrund des angesprochenen Druckunterschiedes ist unabhängig vom Bewegungszustand des Filterbandes die ungewollte Durchtrittsstelle sicher verschlossen, so daß mit der erfindungsgemäßen Filtrieranlage ein kontinuierliches Filtrieren ohne Stillstandszeiten möglich ist. Da die angesprochene Abdichtvorrichtung im übrigen unempfindlich gegenüber den Schmutzteilen ist, insbesondere in Form des Metallspäneanfalles, ist die erfindungsgemäße Filtrieranlage wartungsarm und unnötige Stillstandszeiten sind mithin vermieden.

Bei einer bevorzugten Ausführungsform der erfindungsgemäßen Filtrieranlage ist die Abdeckfläche von einer längs der Transportrichtung des Filterbandes verlaufenden Reihe hintereinander angeordneter Strömungskanäle durchbrochen, die das Innere des Sammelbehälters mit mindestens einem der Versorgungskanäle verbinden. Mit den seitens des jeweiligen Versorgungskanales druckbeaufschlagten Strömungskanälen ist es möglich, in Richtung auf die Durchtrittsstelle zuwandernde Schmutzteile, wie Späne, wieder in Richtung des Inneren des Sammelbehälters zurückzuführen. Vorzugsweise ist hierbei der jeweilige Strömungskanal über die Oberseite des Filterbandes geführt und erweitert sich zum Inneren des Sammelbehälters hin im Querschnitt, was günstige Strömungsverhältnisse ergibt.

Bei einer weiteren besonders bevorzugten Ausführungsform der erfindungsgemäßen Filtrieranlage sind an jedem Rand des Bandes zwei parallel zueinander verlaufende Versorgungskanäle vorhanden, die zumindest teilweise druckführend miteinander in Verbindung stehen. Auf diese Art und Weise läßt sich das absperrende Druckniveau in den Versorgungskanälen gestaffelt weiter erhöhen.

Bei einer bevorzugten Ausführungsform der erfindungsgemäßen Filtrieranlage steht zumindest einer der Versorgungskanäle über düsenartige Fortsätze mit der randseitigen Unterseite des Filterbandes in Verbindung. Neben der angesprochenen Absperrfunktion zum Abdichten der ungewollten Durchtrittsstelle kann dann über die düsenartigen Fortsätze zusätzlich eine hydrostatische Lagerung verwirklicht werden, die eine hemmungsfreie Fortbewegung des Filterbandes erlaubt. Vorzugsweise durchgreift hierbei der jeweilige düsenartige Fortsatz eine Lauffläche zum reibungsarmen Führen des Filterbandes, die unterhalb der Abdeckfläche angeordnet ist.

Bei einer weiteren bevorzugten Ausführungsform der erfindungsgemäßen Filtrieranlage ist das Filterband randseitig zwischen der Abdeckfläche und der Lauffläche geführt, so daß sich für das Filterband eine genau definierte Führung ergibt, die das Absperren der ungewollten Durchtrittsstelle erleichtert.

Bei einer weiteren besonders bevorzugten Ausführungsform der erfindungsgemäßen Filtrieranlage ist das jeweilige Sperrmedium ein Fluid oder ein Gas, insbesondere in Form von Raumluft. Besonders bei den Stillstandszeiten der Filtrieranlage, wie beispielsweise am Wochenende, ist das Einblasen von Raumluft über die Versorgungskanäle zweckmäßig, um ein "Faulen" der Suspension zu verhindern, das die gesamte Filtrieranlage unbrauchbar werden lassen kann. In der Vergangenheit war es hierzu notwendig, die Suspension aus der Filtrieranlage zu entfernen, sofern diese längere Zeit still stand.

Im folgenden ist die erfindungsgemäße Filtrieranlage anhand der Zeichnung näher erläutert.

Es zeigen, teilweise in prinzipieller Darstellung und nicht maßstäblich, die
Fig.1 einen schematischen Längsschnitt durch die Filtrieranlage;
Fig.2 einen Schnitt durch die Filtrieranlage nach der Linie 11 - 11 in Fig.1;
Fig.3 eine vergrößerte Darstellung des Inhalts des mit 111 gekennzeichneten Kreises in Fig.2;
Fig.4 einen Schnitt längs der Linie IV - IV in Fig.3.

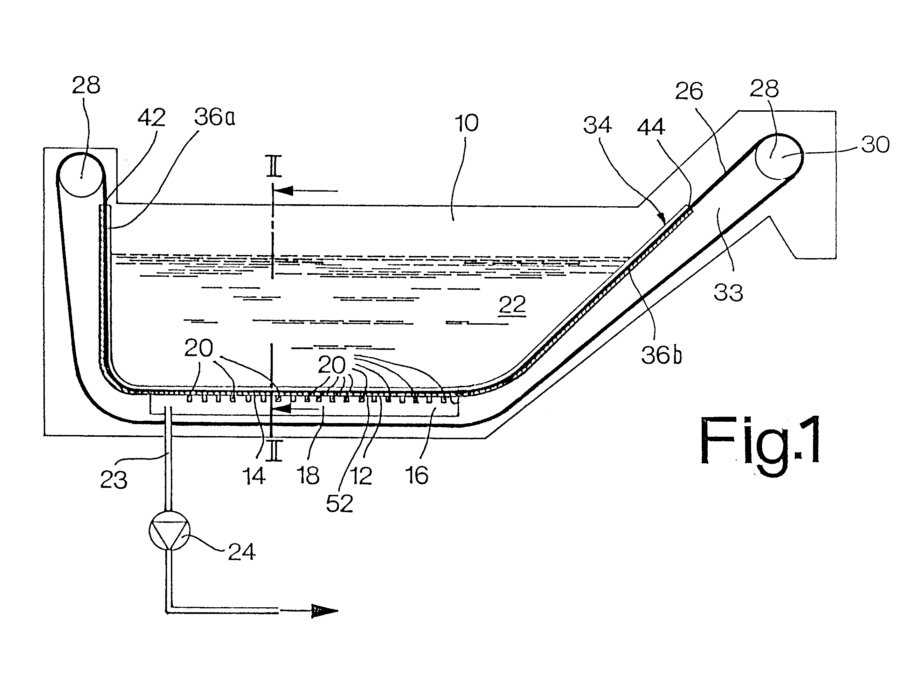

Die Fig.1 zeigt den prinzipiellen Aufbau der erfindungsgemäßen Filtrieranlage. Sie weist einen Sammelbehälter 10 auf, der wannenförmig ausgebildet ist. An seinem in der Fig.1 gesehen unteren Teil weist er ein Bodenteil 12, beispielsweise in Form eines Bodenbleches, auf. Dieser Bodenteil 12 ist von einem Durchgang 14 durchbrochen, der eine rechteckförmige Ausnehmung im Bodenteil 12 bildet. In der Fig.1 gesehen ist unterhalb dieses Durchganges 14 mittels einer Wanne 16, die Teil des wannenförmigen Sammelbehälters 10 ist, das Innere des Sammelbehälters 10 von der Umgebung außerhalb desselben getrennt. Der Inhalt dieser Wanne 16 bildet eine Absaugkammer 18 aus, die über den Durchgang 14 mit dem Inneren des Sammelbehälters 10 verbunden ist.

Der Durchgang 14 ist von Stützelementen 20 durchzogen, die aus Stäben, beispielsweise Profilstäben, mit kreisrundem oder quadratischem Querschnitt gebildet sind und die im wesentlichen horizontal verlaufend mit ihren Enden an den Rändern des Durchganges 14 im Bodenteil 12 stationär gehalten sind. Die Stützelemente können jedoch auch durch einen Lochblechboden (nicht dargestellt) gebildet sein. Auch können sich die angesprochenen Profilstäbe gitterförmig über den Durchgang 14 erstrecken.

Über eine nicht dargestellte Zuführstelle wird verschmutzte Kühlschmierstoffflüssigkeit, die die Suspension 22 ausbildet, von einer oder mehreren Bearbeitungsmaschinen (nicht dargestellt) in das Innere des Sammelbehälters 10 geleitet. Das Innere der Absaugkammer 18 ist über eine Verbindungsleitung 23 an eine Saugpumpe 24 angeschlossen, deren Ausgang an eine Verbraucherstelle, beispielsweise in Form der angesprochenen Bearbeitungsmaschinen, angeschlossen ist. Der Pfeil in der Fig.1 gibt dabei die Durchflußrichtung an, sofern die Saugpumpe 24 in Betrieb ist. Über die Saugpumpe 24 wird ein Vakuum in der Absaugkammer 18 erzeugt, das die Filtration der Suspension 22 bewirkt.

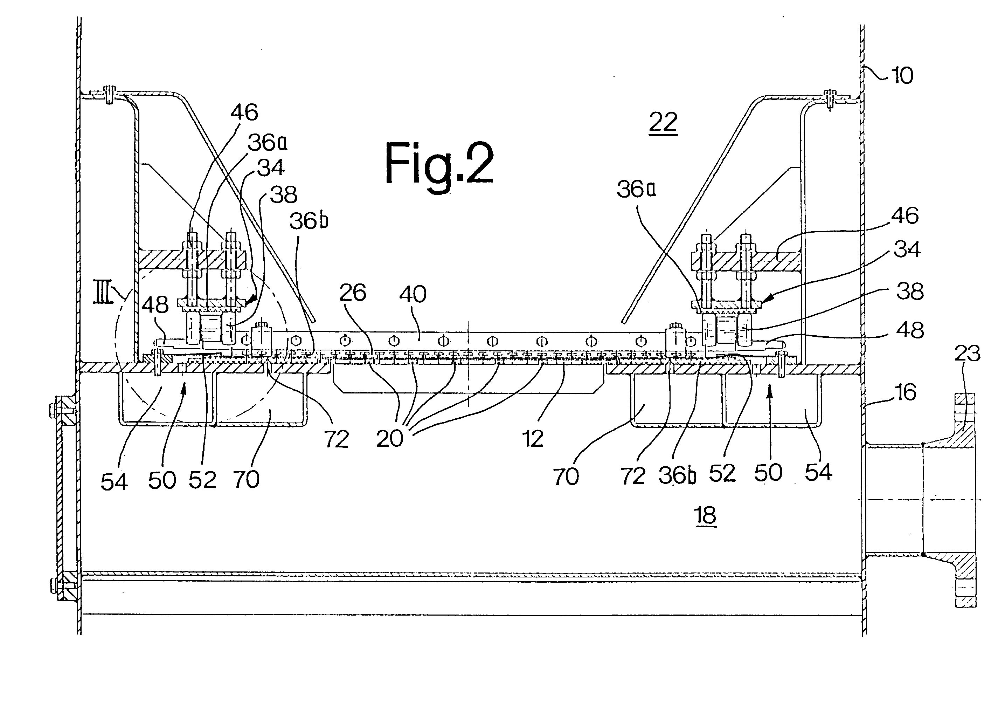

Die erfindungsgemäße Filtrieranlage weist ferner ein als Endlosband ausgebildetes Filterband 26 auf, das um entsprechende Umlenkstellen und Umlenkrollen 28 geführt in der Darstellung nach der Fig.1 mittels eines Antriebes 30 im Uhrzeigersinn transportierbar ist. Der einfacheren Darstellung wegen sind nicht alle Umlenkrollen gezeigt. Im Bereich des Durchganges 24, also im Bereich des Überganges zwischen dem Inneren des Sammelbehälters 10 und der Absaugkammer 18, ist dieses Endlosfilterband 26 mittels der Stützelemente 20 (s.Fig.2) über diesen Durchgang 14 geführt. Das Filterband 26 weist eine Perforierung 32 (s.Fig.4) auf, die durchlässig ist und insbesondere von einem Filtermittel, beispielsweise in Form eines feinen Drahtgewebes, abgedeckt ist.

Der prinzipielle Aufbau eines dahingehenden Filtermittels in Form eines Filterbandes läßt sich aus der DE 40 19 500 A1 der Anmelderin ersehen. Jedenfalls dient das Filtermittel oder Filtermaterial dazu, die Fett- oder Schmutzteile der Suspension 22 in der Wanne des Sammelbehälters 10 zurückzuhalten, wohingegen die flüssigen Anteile und mithin der Reinanteil in die Wanne 16 der Absaugkammer 18 gelangt. Es ist also über die Perforierung 32 ständig eine durchgehende fluidführende Verbindung zwischen dem Inneren des Sammelbehälters 10 und dem Inneren der Absaugkammer 18 hergestellt. Die Breite des Filterbandes 26 ist derart gewählt, daß es im Bereich des Durchganges 14 diesen mit einem gewissen Überhang an den Rändern des Durchganges 14 (s.Fig.2) vollständig abdeckt. Der Schmutzaustrag der Festteile, wie Späne, erfolgt mittels des Filterbandes 26 über die Austragschräge 33 des Sammelbehälters 10.

In dem Sammelbehälter 10 verläuft eine als Ganzes mit 34 bezeichnete Führung, die im wesentlichen zwei Führungsschienen 36a,b aufweist. Wie insbesondere die Fig.2 zeigt, sind diese Führungen 34 an beiden Rändern des Filterbandes 26 innerhalb des Sammelbehälters 10 vorgesehen. Längs dieser Führungen 34 oder der beiden Führungsschienenpaare 36a,b wird das Filterband 26 innerhalb des Sammelbehälters 10 im wesentlichen verfahren. Für dieses Verfahren weist das Filterband 26 endseitig Führungsrollenpaare 38 auf, die an hochstehenden Stegen 40 auf dem Filterband festgelegt sind. Die Stege 40 und die ihnen zugeordneten Führungsrollenpaare 38, die längs der oberen Führungsschienen 36a abrollen, sind in vorgebbaren Abständen voneinander über das gesamte Filterband 26 verteilt angeordnet und zwischen den Stegen 40 ist plattenartig und mit diesen fest verbunden das Filtermittel mit den Perforierungen 32 vorhanden.

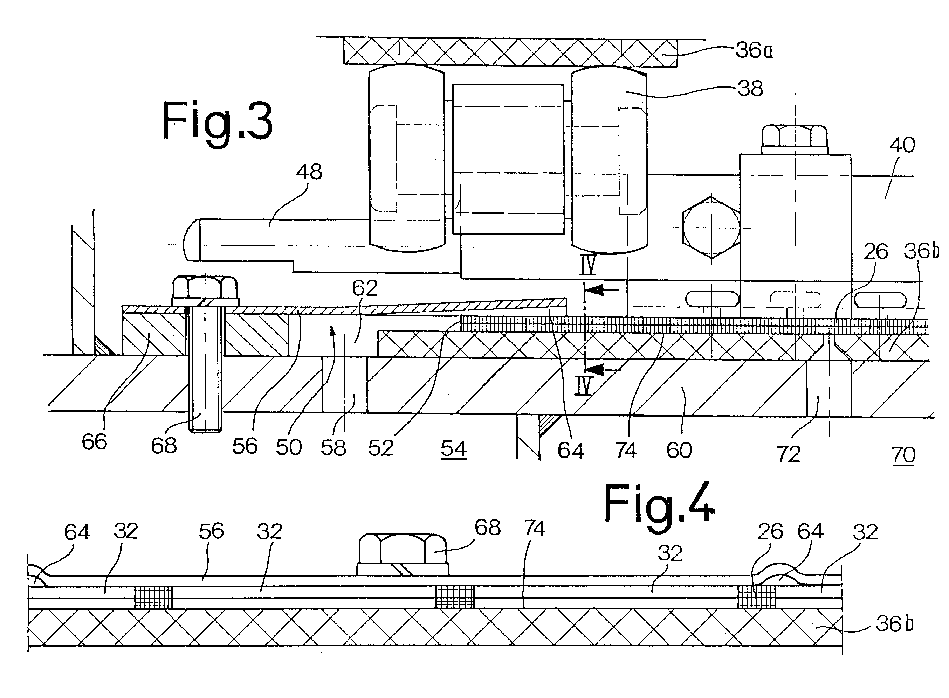

Jede Führung 34 weist eine Einlaufstelle 42 sowie eine Auslaufstelle 44 für das Filterband 26 auf. Die obere Führung 36a läßt sich in ihrer axialen Höhe über Einstellmittel 46 (s.Fig.2) festlegen, so daß im Bereich der Führung 34 das Filterband 26 sicher auf der Oberseite der unteren Führung 36b aufliegt. Wie insbesondere die Fig.2 und 3 zeigen, weist für den Antrieb des Filterbandes 26 jeder Steg 40 endseitig einen über das Filterband 26 randseitig vorstehenden Mitnahmezapfen 48 auf, der jeweils mit einem nicht dargestellten Zahnkranz des Antriebes 30 zusammenwirkt.

Ein als Ganzes mit 50 bezeichnetes Dichtmittel, das jeweils an beiden randseitigen Enden des Filterbandes 26 angeordnet ist, sofern dieses die Absaugkammer 18 im Bereich des Durchganges 14 überfährt, verschließt dichtend eine ungewollte Durchtrittsstelle 52 zwischen dem Inneren des Sammelbehälters 10 und der Absaugkammer 18, wobei mit einem druckbeaufschlagten Sperrmedium in Form eines Fluids, wie Öl, oder in Form eines Gases, wie der Raumluft, die Durchtrittsstelle 52 abgesperrt wird. Hierzu weist das jeweilige Dichtmittel 50 einen ersten, starr ausgebildeten Versorgungskanal 54 auf, der mit einer plattenartigen, metallischen Abdeckfläche 56 das Filterband unter Bildung der Durchtrittsstelle 52 randseitig übergreift.

Der im Querschnitt rechteckförmig ausgelegte erste Versorgungskanal 54 ist an eine druckerzeugende Fluid- und/oder Gasquelle (nicht dargestellt) angeschlossen, beispielsweise in Form einer Pumpe, die das jeweils angesprochene Medium in den Versorgungskanal 54 leitet. Der jeweilige erste Versorgungskanal 54 steht mit der Durchtrittsstelle 52 über Querkanäle 58 druckführend in Verbindung, die eine Zwischenwand 60 durchgreifen, die zumindest teilweise das Innere des Sammelbehälters 10 von dem Inneren der Absaugkammer 18 absperrt. Die Querkanäle 58 wiederum münden in einen Längskanal 62, der oberhalb der Zwischenwand 60 angeordnet ist und der von der bereits angesprochenen Abdeckfläche oder Abdeckplatte 56 nach oben hin abgedeckt ist.

Wie sich insbesondere aus der Fig.4 ergibt, ist die Abdeckfläche 56 von einer längs der Transportrichtung des Filterbandes 26 verlaufenden Reihe hintereinander angeordneter Strömungskanäle 64 durchbrochen, die das Innere des Sammelbehälters 10 mit dem Versorgungskanal 54 verbinden. Hierzu ist die aus einem Federstahl bestehende Abdeckplatte 56 über eine Abstandsleiste 66, die von Schraubenverbindungen 68 durchgreifbar ist, mit der Oberseite der Zwischenwand 60 verbunden. Für den Erhalt des jeweiligen Strömungskanals 64, der über die Oberseite des Filterbandes 26 geführt ist und der sich zum Inneren des Sammelbehälters 10 hin im Querschnitt erweitert, sind tütenförmige Ausnehmungen in die an sonst ebene Abdeckfläche 56 eingepreßt oder eingeprägt.

Um eine sichere Abdichtung zu erreichen, erstreckt sich die Abdichtvorrichtung mit ihren Dichtmitteln 50 über den längs der Transportrichtung des Filterbandes 26 verlaufenden Begrenzungsrand des Durchganges 14 hinaus. Wird über das in dem Versorgungskanal 54 verlaufende Sperrmedium ein Druck im Längskanal 62 erzeugt, der größer ist als die Drucksäule der im Sammelbehälter 10 anstehenden Suspension 22, ist die Durchtrittsstelle 52 sicher abgesperrt und die Suspension kann auch nicht über den freien Öffnungsquerschnitt der Strömungskanäle 64 in Richtung der Absaugkammer 18 eindringen. Im Gegenteil, durch das über die Strömungskanäle 64 austretende druckbeaufschlagte Sperrmedium werden bei der Filtration anfallende Schmutzteile, wie Späne, in Richtung der Oberseite des Filterbandes 26 für einen sicheren Austrag mittels der Stege 48 gebracht. Hierbei ist auch ein Druck-Pulsationsbetrieb möglich, wobei in vorgebbaren Zeitabständen mit einem größeren Druckimpuls das Drucksystem beaufschlagt wird, um rückstoßartig die Schmutzteile aus dem Bereich des Abdichtsystemes zurück in die Suspension 22 oder auf das Filterband 26 zu bringen. Neben dem bereits angesprochenen ersten Versorgungskanal 54 kann ein weiterer zweiter Versorgungskanal 70 jeweils randseitig vorhanden sein, der parallel zu dem ersten Versorgungskanal 54 angeordnet ist und ebenfalls druckführend mit einer Druckquelle in Verbindung steht. In diesem weiteren zweiten Versorgungskanal 70 läßt sich ein gegebenenfalls geringfügig höherer Druck als in dem ersten Versorgungskanal 54 einstellen, so daß sich längs der randseitigen Unterseite des Filterbandes 26 ein Druckgefälle in Richtung der möglichen Durchtrittsstelle 52 ergibt, was die Abdichtung noch weiter verbessert. Hierzu steht der Versorgungskanal 70 über düsenartige Fortsätze 72 mit der randseitigen Unterseite des Filterbandes 26 in Verbindung, das an dieser Stelle, wie insbesondere die Fig.2 zeigt, geschlossen ausgebildet ist und mithin keine Perforierung 32 aufweist.

Der jeweilige düsenartige Fortsatz 72 durchgreift die untere Führungsschiene 36b, die eine Kunststofflauffläche 74 zum reibungsarmen Führen des Filterbandes 26 aufweist und die unterhalb der Abdeckfläche 56 angeordnet ist. Das Filterband 26 ist also mithin randseitig zwischen der Abdeckfläche 56 und der unteren Lagerfläche 36b dichtend geführt, wobei ein über die düsenartigen Fortsätze 72 und den Versorgungskanal 70 zugeführtes Schmiermedium, das zwischen die Unterseite des Filterbandes 26 und die Oberseite der unteren Führung 36b tritt, eine hydrostatische Lagerung des Filterbandes 26 auf der angesprochenen Lauffläche 74 der unteren Führung 36b erlaubt. Im übrigen wird durch den Fluidfilm zwischen der Lauffläche 74 und der Unterseite des Filterbandes 26 dieses über die hydrostatische Lagerung gegen die Unterseite der Abdeckplatte 56 gepreßt, was wiederum die vollständige Abdichtung weiter verbessert.

Bei der bevorzugten Verwendung der Abdichtvorrichtung für die Filtrieranlage wird in der Regel über beide Versorgungskanäle 54 und 70 auf jeder Seite des Filterbandes 26 ein ölartiges Fluid zugeführt werden. Um ein "Faulen" der Suspension in dem Sammelbehälter 10 zu verhindern, beispielsweise bei längeren Stillstandszeiten der Anlage, kann es jedoch vorgesehen sein, zur Belüftung des Inneren des Sammelbehälters 10 über den ersten Versorgungskanal 54 Raumluft unter Druck zuzuführen. Mit der erfindungsgemäßen Filtrieranlage ist jedenfalls ein kontinuierlicher Filtrierbetrieb möglich, wobei eine sichere Abdichtung der Absaugkammer 18 gegenüber der Suspension 22 mit den Schmutzteilen mittels der angesprochenen Dichtmittel 50 erfolgt.

## Patentansprüche

1. Filtrieranlage zum Abfiltrieren einer Flüssigkeit aus einer Schmutzteile aufweisenden Suspension (22), die von einem Sammelbehälter (10) aufnehmbar ist, der über mindestens einen Durchgang (14) mit einer Absaugkammer (18) verbunden ist, in der ein Unterdruck erzeugbar ist, wobei der jeweilige Durchgang (14) von einem endlosen Filterband (26) abdeckbar ist, das mittels eines Antriebes (30) in einer zumindest teilweise innerhalb des Sammelbehälters (10) angeordneten Führung (34) verfahrbar ist, und wobei mindestens ein Dichtmittel (50) vorhanden ist, das randseitig auf das Filterband (26) mit einem druckbeaufschlagten Sperrmedium einwirkend eine ungewollte Durchtrittsstelle (52) zwischen dem Inneren des Sammelbehälters (10) und der Absaugkammer (18) dichtend verschließt, dadurch gekennzeichnet, daß das jeweilige Dichtmittel (50) mindestens einen starr ausgebildeten Versorgungskanal (54) aufweist, der mit einer Abdeckfläche (56) das Filterband (26) unter Bildung der Durchtrittsstelle (52) randseitig übergreift, und daß die derart gebildete Durchtrittsstelle (52) durch den im Versorgungskanal (54) herrschenden Druck des Sperrmediums dichtend verschlossen ist.

2. Filtrieranlage nach Anspruch 1, dadurch gekennzeichnet, daß die Abdeckfläche (56) von einer längs der Transportrichtung des Filterbandes (26) verlaufenden Reihe hintereinander angeordneter Strömungskanäle (64) durchbrochen ist, die das Innere des Sammelbehälters (10) mit mindestens einem der Versorgungskanäle (54) verbinden.

3. Filtrieranlage nach Anspruch 2, dadurch gekennzeichnet, daß der jeweilige Strömungskanal (64) über die Oberseite des Filterbandes (26) geführt ist und sich zum Inneren des Sammelbehälters (10) hin im Querschnitt erweitert.

4. Filtrieranlage nach einem der Ansprüche 1 bis 3, dadurch gekennzeichnet, daß an jedem Rand des Bandes (26) zwei parallel zueinander verlaufende Versorgungskanäle (54,70) vorhanden sind, die zumindest teilweise druckführend miteinander in Verbindung stehen.

5. Filtrieranlage nach Anspruch 4, dadurch gekennzeichnet, daß zumindest einer der Versorgungskanäle (70) über düsenartige Fortsätze mit der randseitigen Unterseite des Filterbandes (26) in Verbindung steht.

6. Filtrieranlage nach Anspruch 5, dadurch gekennzeichnet, daß der jeweilige düsenartige Fortsatz (72) eine Lauffläche (74) zum reibungsarmen Führen des Filterbandes (26) durchgreift, die unterhalb der Abdeckfläche (56) angeordnet ist.

7. Filtrieranlage nach Anspruch 6, dadurch gekennzeichnet, daß das Filterband (26) randseitig zwischen der Abdeckfläche (56) und der Lauffläche (74) geführt ist.

8. Filtrieranlage nach einem der Ansprüche 1 bis 7, dadurch gekennzeichnet, daß das jeweilige Sperrmedium ein Fluid oder ein Gas, insbesondere in Form von Raumluft, ist.
